# EUROPÄISCHE PATENTSCHRIFT

(11) **EP 1 536 529 B1**
(45) Veröffentlichungstag und Bekanntmachung des Hinweises auf die Patenterteilung: **19.12.2007**
(21) Anmeldenummer: 05004390.0
(22) Anmeldetag: 05.07.2000
(51) Int. Cl.: H01S 3/08, G02B 5/08

(54) **Dispersiver, mehrschichtiger Spiegel**
Dispersive multi-layer mirror
Miroir multicouche dispersif

(30) Priorität: 07.07.1999 AT 116099
(43) Veröffentlichungstag der Anmeldung: 01.06.2005
(62) Teilanmeldung aus: 00948993.1
(73) Patentinhaber: Tempea, Gabriel Florin, 1080 Wien (AT)
(72) Erfinder: Tempea, Gabriel Florin, 1080 Wien (AT); Krausz, Ferenc, 85748 Garching (DE)
(74) Vertreter: Weinzinger, Arnulf

(56) Entgegenhaltungen:
- US-A- 5 912 915
- MATUSCHEK N ET AL: "Analytical design of double-chirped mirrors with custom-tailored dispersion characteristics" IEEE JOURNAL OF QUANTUM ELECTRONICS, IEEE, USA, Bd. 35, Nr. 2, Februar 1999 (1999-02), Seiten 129-137, XP002149880 ISSN: 0018-9197
- TEMPEA G ET AL: "Dispersion control over 150 THz with chirped dielectric mirrors" IEEE JOURNAL OF SELECTED TOPICS IN QUANTUM ELECTRONICS, IEEE, USA, Bd. 4, Nr. 2, April 1998 (1998-04), Seiten 193-196, XP002149881 ISSN: 1077-260X
- SZIPOCS R ET AL: "CHIRPED MULTILAYER COATINGS FOR BROADBAND DISPERSION CONTROL IN FEMTOSECOND LASERS" OPTICS LETTERS,US,OPTICAL SOCIETY OF AMERICA, WASHINGTON, Bd. 19, Nr. 3, 1. Februar 1994 (1994-02-01), Seiten 201-203, XP000424364 ISSN: 0146-9592

## Beschreibung

Die Erfindung betrifft einen dispersiven, mehrschichtigen Spiegel, z.B. für Kurzpuls-Laservorrichtungen, Oszillatoren, Laserverstärker oder Hohlfaser-Kompressoren, welcher Spiegel mehrere auf einem Substrat angebrachte dielektrische Einzelschichten zur Erzeugung vorgegebener Dispersionswerte für verschiedene Frequenzkomponenten von zu reflektierenden Strahlungs-Kurzpulsen aufweist.

In der Lasertechnik werden zunehmend kürzere Laserimpulse, mit Impulsdauern im Pikosekunden- und Femtosekunden-Bereich, angestrebt. Abgesehen von der Anwendung in wissenschaftlichen Berreichen werden derartige Kurpuls-Laservorrichtungen zunehmend in der Industrie für Materialbearbeitungen eingesetzt. Die bei solchen Kurzpuls-Laservorrichtungen eingesetzten Laserkristalle, vgl. beispielsweise WO 98/10494 A, haben ausgezeichnete thermische Eigenschaften sowie breite Fluoreszenzbänder, um die Erzeugung von Laserimpulsen mit Impulsdauern unter 10 oder sogar unter 5 Femtosekunden zu ermöglichen. Insbesondere werden hier Laserkristalle eingesetzt, die mit Übergangsmetallen dotiert sind, wie vor allem der Titan-Saphir (Ti: S)-Laserkristall.

Ein Problem bei der Erzeugung derartiger ultrakurzer Laserimpulse oder allgemein Strahlungsimpulse liegt in den übrigen optischen Komponenten des Lasersystems, wobei es insbesondere von Bedeutung wäre, breitbandige, hochreflektierende optische Elemente bzw. dispersive (d.h. eine Dispersionskomponente bewirkende) Komponenten zur Verfügung zu haben.

Es ist nun bereits vorgeschlagen worden, dispersive Komponenten für derartige Laservorrichtungen in Dünnschicht-Technik auszuführen, vgl. z.B. die US 5 734 503 A sowie A. Stingl et al., "Generation of 11-fs pulses from a Ti:sapphire laser without the use of prisms", Optics Letters, Vol. 19, Nr. 3, Februar 1994, S. 204-206. Dabei werden die Spiegel aus einer Vielzahl (z.B. 42) von Einzelschichten mit verschiedenen Brechungsindizes aufgebaut, die bei der Reflexion eines ultrakurzen Laserimpulses - der eine entsprechend große Bandbreite im Frequenzbereich aufweist - ihre Funktion ausüben: Die verschiedenen Wellenlängenkomponenten des Laserstrahls dringen unterschiedlich tief in die Einzelschichten des Spiegels ein, bevor sie reflektiert werden.

Dadurch werden die verschiedenen Frequenzkomponenten verschieden lang, entsprechend der jeweiligen Schichttiefe, verzögert; die kurzwelligen Komponenten werden weiter außen reflektiert, die langwelligen Anteile hingegen tiefer im Spiegel. Dies bedeutet, dass die langwelligen Frequenzkomponenten gegenüber den kurzwelligen Komponenten zeitlich verzögert werden. Auf diese Weise kann bei einer Laservorrichtung eine Dispersionskompensation für einen Kurzpuls-Laserstrahl erhalten werden: Im Zeitbereich besonders kurze Impulse besitzen nämlich ein breites Frequenzspektrum, wobei aber die verschiedenen Frequenzkomponenten des Laserstrahls im zugehörigen Laserkristall - der optisch nichtlinear ist - einen unterschiedlichen Brechungsindex "sehen" (d.h. die optische Dicke des Laserkristalls ist für die verschiedenen Frequenzkomponenten der Laserimpulse verschieden groß); die verschiedenen Frequenzkomponenten des Laserimpulses werden daher beim Durchlaufen des Laserkristalls verschieden verzögert. Diesem Effekt kann durch die genannte Dispersionskompensation an den bekannten Dünnschicht-Laserspiegeln begegnet werden, die demgemäß als "dispersiv" bezeichnet werden. Diese bekannten Spiegel werden auch "gechirpte" Spiegel (Chirped Mirrors - CM) genannt und stellten einen wesentlichen Fortschritt im Vergleich zu davor eingesetzten Verzögerungselementen mit Prismen dar. Es konnten erstmals Laser-Impulse mit Impulsdauern von 10 fs und darunter direkt von einem Laseroszillator erhalten werden, und die Lasersysteme wurden kompakter und verlässlicher. Die CM-Spiegel steuern die Wellenlängen-Abhängigkeit der Grupenverzögerung wie erwähnt durch die Eindringtiefe der verschiedenen spektralen Komponenten in der Vielschichtstruktur. Eine derartige Vielschichtstruktur ist jedoch relativ aufwendig in der Herstellung und weist überdies relativ große Dickenabmessungen auf.

Ein "gechirpter" Spiegel ist auch aus dem Artikel N. Matuschek et al.: "Analytical Design of Double-Chirped Mirrors with Custom-Tailored Dispersion Characteristics", IEEE Journal of Quantum Electronics, Feb. 1999, USA, Band 35, Nr. 2, S. 129-137, bekannt; bei diesem bekannten Spiegel ist auf einem HalbleiterSubstrat eine Schichtstruktur mit vier Bereichen aufgebracht, wobei ein an das Substrat anschließender mehrschichtiger Viertelwellenlängen-Bereich als Bragg-Reflektor vorgesehen ist, über dem ein Einfach-Chirpbereich sowie ein Doppel-Chirpbereich und schließlich eine Antireflexionsbeschichtung angebracht sind.

In der nicht vorveröffentlichten früheren EP 1 105 735 A (= WO 00/11501 A), die einen Stand der Technik gemäß Art. 54(3) und (4) EPÜ hinsichtlich der Vertragsstaaten CH/LI, DE, FR, GB, IT bildet, ist ein dispersiver mehrschichtiger Spiegel beschrieben, bei dem gegebenenfalls auf einem Substrat eine Gold-, Aluminium- oder Magnesiumschicht, also eine hochreflektierende Metallschicht, und darüber - ohne dass eine Zwischensicht angegeben ist - eine Vielzahl von dielektrischen Schichten angebracht sind, um für eine negative Gruppenverzögerungsdispersion zwei oder mehr Resonatoren zu bilden.

Aufgabe der Erfindung ist es, breitbandige dispersive Spiegel vorzusehen, die einen einfachen Schichtaufbau ermöglichen, wobei auch vergleichsweise kurze optische Weglängen erzielbar sein sollen, und wobei nichtsdestoweniger auch vergleichsweise große Dispersionswerte für die Gruppenverzögerung ermöglicht werden sollen. Vor allem soll auch eine gute Haftung der dielektrischen Schichten auf dem Substrat bzw. genauer auf einer auf dem Substrat angebrachten reflektierenden Schicht erzielt werden.

Diese Aufgabe wird gemäß der Erfindung durch die in Anspruch 1 angegebenen Merkmale gelöst. Vorteilhafte Ausführungsformen und Weiterbildungen sind in den abhängigen Ansprüchen angegeben.

Beim vorliegenden Spiegel kann die Wellenlängen-Abhängigkeit der Impulsverzögerung oder Gruppenlaufzeit mit Hilfe der Speicherzeit der verschiedenen Spektralkomponenten im Spiegel gesteuert werden. Der vorliegende dispersive Spiegel ist ein resonanter Spiegel, wobei die gesamte optische Dicke für die Erzielung derselben gruppenweisen Dispersion und des gleichen Reflexionsvermögens im vergleichbaren Spektralbereich vergleichsweise kleiner sein kann als bei den bekannten CM-Spiegeln.

An sich ist es bereits seit langem bekannt, die Speicherzeit von optischen Impulsen in einer resonanten Struktur zu steuern, um so eine zeitliche Verzögerung bestimmter Dauer einzuführen. In der vergangenheit wurden jedoch diese bekannten resonanten Strukturen nur mit schmalbandigen optischen Komponenten - sog. Gires-Tournois-Interferometer (GTI) - in Zusammenhang gebracht; im Gegensatz dazu haben zur Erfindung führende Untersuchungen gezeigt, dass problemlos Breitbandsysteme, beispielsweise für Wellenlängen im Bereich von 300 nm bei einer zentralen Wellenlänge von 800 nm, erzielt werden können, wenn erfindungsgemäß eine reflektierende Metallschicht, beispielsweise mit Silber oder Aluminium, in Kombination mit einer dielektrischen, resonanten Beschichtungsstruktur, beispielsweise mit bloß 20 bis 30 dielektrischen Einzelschichten, kombiniert wird.

Ein GTI-Interferometer besteht aus einer hochreflektierenden Schicht, einer Zwischenschicht und einer teilreflektierenden Schicht, die eine (bei einer bestimmten Wellenlänge) resonante Kavität bilden. Im vorliegenden Fall des resonanten dispersiven Spiegels werden die Zwischenschicht und die obere teilreflektierende Schicht durch eine schwach resonante Mehrschichtstruktur ersetzt. Dadurch ist eine Kavität an sich nicht mehr zu erkennen.

Die dielektrische resonante Beschichtungsstruktur des vorliegenden Spiegels verstärkt geringfügig das Reflexionsvermögen der hochreflektierenden Metallschicht, sie hat aber den Hauptzweck, die Phase der reflektierenden Impulse zu modulieren.

Die technologischen Anforderungen an einen derartigen dispersiven resonanten Spiegel sind vergleichbar jenen bei den CM-Spiegeln. Zum Erzielen desselben Gruppenverzögerungs-Dispersionsvermögens und Reflexionsvermögens für denselben Spektralbereich kann jedoch eine vergleichsweise geringere optische Dicke angewandt werden. Für einen CM-Spiegel ist der Mindestwert der Beschichtungsdicke durch die optische Weglänge entsprechend der Gruppenverzögerung gegeben, die zwischen der kürzesten und längsten Wellenlänge im hochreflektierenden Bereich eingeführt wird. Zufolge der resonanten Struktur sind die erfindungsgemäßen dispersiven Spiegel dieser Beschränkung jedoch nicht unterworfen, und es können höhere Dispersionswerte bei kürzeren optischen Dicken eingeführt werden. Ein weiterer Unterschied zu den CM-Spiegeln besteht darin, dass sich die durchschnittliche optische Schichtdicke nicht mit dem Abstand vom Trägersubstrat monoton ändert, sondern beim konstanten Mittelwert bleibt.

Insgesamt enthält der vorliegende Spiegel somit eine hoch reflektierende optische Interferenzbeschichtung, bei der ein hochreflektierender Reflektor monolithisch mit einer schwach resonanten dielektrischen Schichtstruktur integriert ist. Die Frequenzabhängigkeit der Gruppenverzögerung (Group Delay - GD) wird über die Speicherzeit für die verschiedenen Spektralkomponenten in der resonanten Struktur gesteuert.

Der erfindungsgemäße Spiegel eignet sich zur Dispersionskontrolle für breitbandige elektromagnetische Signale allgemein im Frequenzbereich von Mikrowellen bis zu Röntgenstrahlen, wobei insbesondere Anwendungen in Festkörperlasern, Laserverstärkern und Hohlfaserkompressoren bevorzugt sind, wo ultrakurze Impulse erzeugt werden, für die die vorliegende genaue und kompakte Dispersionssteuerung vorteilhaft ist. Die Herstellung ist dabei nicht nur wegen der geringen Anzahl an Schichten, verglichen mit CM-Spiegeln, günstiger, sondern auch deshalb, weil die hochreflektierende Metallschicht an sich eine Standardschicht ist. Bei der Anbringung der darüberliegenden dielektrischen Schichten werden Haftprobleme dadurch vermieden, dass zwischen der hochreflektierenden Metallschicht und der dielektrischen resonanten Beschichtungsstruktur eine Haftvermittlungsschicht, z.B. aus Aluminiumoxid (Al₂O₃), vorgesehen ist.

Die dielektrischen Einzelschichten können beispielsweise wie an sich bekannt Siliziumdioxid (SiO₂) bzw. Titandioxid (TiO₂) enthalten; die dielektrischen Einzelschichten können aber auch mit Tantalpentoxid (Ta₂O₅) aufgebaut sein.

Die Erfindung wird nachfolgend anhand von Beispielen unter Bezugnahme auf die Zeichnung noch weiter erläutert. In der Zeichnung zeigen im Einzelnen:
Fig. 1 schematisch den Aufbau eines dispersiven resonanten Spiegels mit einer hochreflektierenden Metallschicht; und
Fig. 2 ein zugehöriges Diagramm des Reflexionsvermögens R (%) bzw. der Gruppenverzögerungs-Dispersion GDD (fs²) über der Wellenlänge λ.

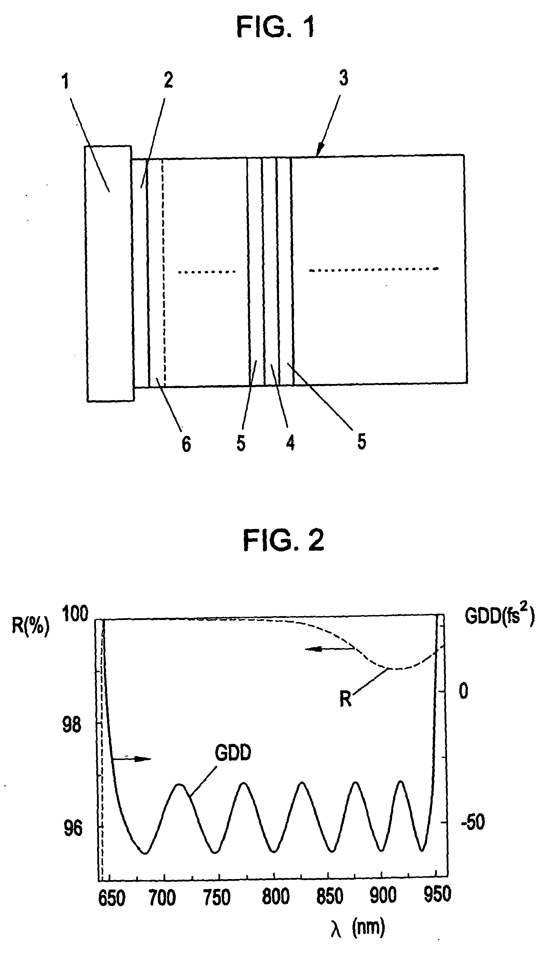

Der in Fig. 1 schematisch veranschaulichte resonante dispersive Spiegel weist auf einem Substrat 1 eine hochreflektierende Metallschicht 2 auf, über der eine resonante dielektrische Mehrschicht-Beschichtungsstruktur 3 mit einigen, z.B. 20 bis 30, Einzelschichten 4, 5 angebracht ist. Diese dielektrischen Einzelschichten 4, 5 sind abwechselnd hochbrechende und niedrigbrechende Schichten unterschiedlicher Dicke, und sie können in an sich bekannter Weise abwechselnd aus Titanoxid (TiO₂) bzw. Siliziumoxid (SiO₂) bestehen.

Für die hochreflektierende Metallschicht 2 kann beispielsweise Silber oder aber Aluminium verwendet werden. Weiters ist zur besseren Haftung der dielektrischen Einzelschichten 4, 5 an der Metallschicht 2 eine Haftvermittlungsschicht 6 vorgesehen, die beispielsweise aus Aluminiumoxid (Al₂O₃) bestehen kann.

Für den Aufbau des in Fig. 1 schematisch veranschaulichten resonanten dispersiven Spiegels kann beispielsweise folgende Schichtenfolge, mit den entsprechenden Schichtdicken (in nm) angeführt werden:

| | |
|---|---|
| Ag | 300,00 |
| Al₂O₃ | 112,36 |
| TiO₂ | 91,66 |
| SiO₂ | 139, 61 |
| TiO₂ | 87,46 |
| SiO₂ | 129,80 |
| TiO₂ | 55,59 |
| SiO₂ | 93,11 |
| TiO₂ | 86,20 |
| SiO₂ | 141,73 |
| TiO₂ | 86,37 |
| SiO₂ | 148, 84 |
| TiO₂ | 52,21 |
| SiO₂ | 55,53 |
| TiO₂ | 85,60 |
| SiO₂ | 158, 43 |
| TiO₂ | 91,84 |
| SiO₂ | 83,49 |
| TiO₂ | 30,00 |
| SiO₂ | 120,28 |
| TiO₂ | 98,41 |
| SiO₂ | 156,27 |
| TiO₂ | 21,04 |
| SiO₂ | 67,20 |
| TiO₂ | 97,16 |
| SiO₂ | 164,70 |
| TiO₂ | 20,18 |
| SiO₂ | 60,92 |
| TiO₂ | 94,78 |
| SiO₂ | 139,05 |

Ein derartiger resonanter dispersiver Spiegel ergibt beispielsweise bei Wellenlängen λ von ca. 650 nm bis ca. 950 nm, ein Verhalten hinsichtlich Reflexionsvermögen R (in %) und Dispersion (GDD-Group Delay Dispersions-Gruppenverzögerungs-Dispersion, in fs²; die GDD ist die erste Ableitung der Gruppenverzögerung GD), wie in Fig. 2 dargestellt ist.

Selbstverständlich können auch mehr oder weniger als die angegebenen 28 Einzelschichten 4, 5, je nach Bedarf, eingesetzt werden. Insbesondere können auch weniger, beispielsweise nur ca. 20 Einzelschichten 4, 5 verwendet werden. Darüber hinaus sind auch andere Materialien, wie Tantalpentoxid (Ta₂O₅) usw., denkbar. Wesentlich ist, dass diese Einzelschichten 4, 5 insgesamt eine resonante Mehrschichtstruktur ergeben und dabei die Phasen der reflektierten Impulse modulieren.

## Patentansprüche

1. Dispersiver, mehrschichtiger Spiegel, z.B. für Kurzpuls-La servorrichtungen, Oszillatoren, Laserverstärker oder Hohlfaser-Kompressoren, welcher Spiegel mehrere auf einem Substrat (1) angebrachte dielektrische Einzelschichten (4, 5) zur Erzeugung vorgegebener Dispersionswerte mit Ausnahme von nicht-negativen Dispersionswerten für verschiedene Frequenzkomponenten von zu reflektierenden Strahlungs-Kurzpulsen aufweist, wobei auf dem Substrat (1) eine hochreflektierende Metallschicht (2; 2') zur Reflexion aller Frequenzkomponenten vorgesehen ist, über der mit Hilfe einer Haftvermittlungsschicht (6), z.B. aus Aluminiumoxid (Al₂O₃), die dielektrischen Einzelschichten (4, 5) als resonante Beschichtungsstruktur (3) zur Modulation der Phasen der reflektierten Kurzpulse angebracht sind, und wobei unterschiedliche Speicherzeiten für die verschiedenen Frequenzkomponenten in der resonanten Beschichtungsstruktur (3) gegeben sind.

2. Spiegel nach Anspruch 1, **dadurch gekennzeichnet, dass** die hochreflektierende Metallschicht (2) mit Silber aufgebaut ist.

3. Spiegel nach Anspruch 1, **dadurch gekennzeichnet, dass** die hochreflektierende Metallschicht (2) mit Aluminium aufgebaut ist.

4. Spiegel nach einem der Ansprüche 1 bis 3, **dadurch gekennzeichnet, dass** nur ca. 20 bis 30 dielektrische Einzelschichten (4, 5) vorgesehen sind.

5. Spiegel nach einem der Ansprüche 1 bis 4, **dadurch gekennzeichnet, dass** die dielektrischen Einzelschichten (4, 5) abwechselnd hoch- und niedrigbrechend sind.

6. Spiegel nach einem der Ansprüche 1 bis 5, **dadurch gekennzeichnet, dass** die dielektrischen Einzelschichten (4, 5) abwechselnd aus Siliziumdioxid (SiO₂) bzw. Titandioxid (TiO₂) bestehen.

## Claims

1. A dispersive multilayer mirror, e.g. for short-pulse laser arrangements, oscillators, laser amplifiers or hollow fiber compressors, said mirror comprising several individual dielectric layers (4, 5) applied on a substrate (1) so as to produce given dispersion values, with the exception of non-negative dispersion values, for different frequency components of radiation short pulses to be reflected, wherein a highly-reflecting metal layer (2; 2') for reflecting all the frequency components is provided on the substrate (1), with the individual dielectric layers (4, 5) being applied thereabove as a resonant coating structure (3) by means of an adhesion enhancing layer (6), e.g. of aluminium oxide (Al₂O₃), for modulating the phases of the reflected short pulses, different storage times being given for the different frequency components in the resonant coating structure (3).

2. The mirror according to claim 1, **characterised in that** the highly-reflecting metal layer (2) comprises silver.

3. A mirror according to claim 1, **characterised in that** the highly reflecting metal layer (2) comprises aluminium.

4. A mirror according to any one of claims 1 to 3, **characterised in that** merely approximately 20 to 30 individual dielectric layers (4, 5) are provided.

5. A mirror according to any one of claims 1 to 4, **characterised in that** the individual dielectric layers (4, 5) are alternately high-refracting and low-refracting.

6. A mirror according to any one of claims 1 to 5, **characterised in that** the individual dielectric layers (4, 5) alternately consist of silicon dioxide (SiO₂), and titanium dioxide (TiO₂), respectively.

## Revendications

1. Miroir dispersif multicouche, par exemple pour dispositifs laser à impulsions courtes, oscillateurs, amplificateurs laser ou compresseurs à fibres creuses, lequel miroir présente plusieurs couches diélectriques individuelles (4,5) appliquées sur un substrat (1) pour produire des valeurs de dispersion prédéterminées, à l'exception de valeurs de dispersion non négatives, pour différentes composantes de fréquences d'impulsions courtes de rayonnement à réfléchir, dans lequel (1) une couche métallique hautement réfléchissante (2 ; 2') étant prévue sur le substrat pour réfléchir toutes les composantes de fréquences, sur laquelle on applique les couches diélectriques individuelles (4, 5) à l'aide d'une couche adhésive (6), par exemple en oxyde d'aluminium (Al₂O₃), sous la forme d'une structure de revêtement résonante (3) pour moduler les phases des impulsions courtes réfléchies, différentes durées de mémorisation étant assurées pour les différentes composantes de fréquences dans la structure de revêtement résonante (3).

2. Miroir selon la revendication 1, **caractérisé en ce que** la couche métallique hautement réfléchissante (2) est constituée d'argent.

3. Miroir selon la revendication 1, **caractérisé en ce que** la couche métallique hautement réfléchissante (2) est constituée d'aluminium.

4. Miroir selon l'une quelconque des revendications 1 à 3, **caractérisé en ce que** l'on ne prévoit qu'environ 20 à 30 couches diélectriques individuelles (4, 5).

5. Miroir selon l'une quelconque des revendications 1 à 4, **caractérisé en ce que** les couches diélectriques individuelles (4, 5) sont, en alternance, à forte réfraction et à faible réfraction.

6. Miroir selon l'une quelconque des revendications 1 à 5, **caractérisé en ce que** les couches diélectriques individuelles (4, 5) sont constituées, en alternance, de dioxyde de silicium (SiO₂) ou de dioxyde de titane (TiO₂).
